# EUROPEAN PATENT APPLICATION

(11) **EP 4 492 523 A1**
(43) Date of publication of application: **15.01.2025**
(21) Application number: 23877541.5
(22) Date of filing: 21.09.2023
(51) Int. Cl.: H01M 10/056, H01M 4/139, H01M 10/052

(54) **COMPOSITE ELECTROLYTE, METHOD FOR PREPARING SAME, AND LITHIUM SECONDARY BATTERY COMPRISING SAME**

(30) Priority: 14.10.2022 KR 20220132212; 20.09.2023 KR 20230125560
(71) Applicant: LG Energy Solution, Ltd., Seoul 07335 (KR)
(72) Inventor: HWANG, Sunwook, Daejeon 34122 (KR); HAN, Hyea Eun, Daejeon 34122 (KR); KIM, Dong Kyu, Daejeon 34122 (KR)
(74) Representative: Goddar, Heinz J.
(86) International application number: PCT/KR2023/014334
(87) International publication number: WO 2024/080613

(57) **Abstract**

The present disclosure relates to a composite electrolyte that exhibits improved mechanical properties and ionic conductivity while preventing a liquid leakage, its preparation method and a secondary battery comprising the same. The composite electrolyte may include a liquid electrolyte; a crosslinked polymer of monomers having a curable functional group; and oxide-based solid electrolyte particles dispersed on the crosslinked polymer and having a particle size of more than 300 nm.

## Description

### [TECHNICAL FIELD]

### Cross Citation with Related Application(s)

This application claims the benefit of Korean Patent Application No. 10-2022-0132212 filed on October 14, 2022 and Korean Patent Application No. 10-2023-0125560 filed on September 20, 2023 in the Korean Intellectual Property Office, the disclosures of which are incorporated herein by reference in their entirety.

The present disclosure relates to a composite electrolyte that exhibits improved mechanical properties and ionic conductivity while preventing a liquid leakage, its preparation method and a secondary battery comprising the same.

### [BACKGROUND]

Recently, with the rapid spread of electronic apparatuses using batteries, such as mobile phones, notebook computers, electrical vehicles, etc., demand for secondary batteries that are small, light-weight and relatively high-capacity has been rapidly increasing. Particularly, the lithium secondary battery is light-weight and has a high energy density, and thus attracts attention as a driving power source of portable devices. Accordingly, research and development efforts are actively performed for improving the performance of the lithium secondary battery.

Such lithium secondary batteries, for example, lithium ion batteries, generally have a configuration in which a separation membrane is interposed between a positive electrode and a negative electrode composed of an active material capable of intercalation and deintercalation of lithium ions, and a liquid state electrolyte is charged. However, in the case of lithium ion batteries, as they contain a liquidstate electrolyte, there is a high possibility that liquid leakage will occur during the charging/discharging or usage process, and there is a high risk of ignition or explosion, which has emerged as a major problem.

In recent years, solid electrolytes have been actively developed to improve the safety of lithium secondary batteries, and as one of these, research is being conducted on polymer solid electrolytes. However, such polymer solid electrolytes themselves exhibit lower ionic conductivity than the liquid state electrolyte, and thus, the use of a liquid electrolyte, for example, a composite electrolyte containing a lithium salt and an organic solvent in a polymer, is being more widely considered.

However, even in the case of such existing composite electrolytes, there was still a possibility of liquid leakage during manufacture or use of the battery, or there were disadvantages that the mechanical properties were insufficient. In addition, there was a problem that a separation membrane was inevitably needed to support the composite electrolyte, and such existing composite electrolytes also do not exhibit sufficient ionic conductivity, and thus, there is a need to improve these points.

### [DETAILED DESCRIPTION OF THE INVENTION]

### [Technical Problem]

It is an object of the present disclosure to provide a composite electrolyte that exhibits improved mechanical properties and ionic conductivity while preventing a liquid leakage, and a preparation method thereof.

It is another object of the present disclosure to provide a secondary battery that comprises the composite electrolyte and thus exhibits improved electrical characteristics and safety.

### [Technical Solution]

According to one aspect of the present disclosure, there is provided a composite electrolyte comprising:
a liquid electrolyte;
a crosslinked polymer of monomers having a curable functional group; and
oxide-based solid electrolyte particles dispersed on the crosslinked polymer and having a particle size of more than 300 nm.

According to another aspect of the present disclosure, there is provided a method for preparing the composite electrolyte as above, the method comprising the steps of: forming, on a substrate, a composition comprising a liquid electrolyte, a monomer having a curable functional group, and oxide-based solid electrolyte particles having a particle size of more than 300 nm; and heat-curing the monomers of the composition at 60°C or more in the presence of an initiator.

According to yet another aspect of the present disclosure, there is provided a lithium secondary battery comprising a positive electrode containing a positive electrode active material; a negative electrode containing a negative electrode active material; and the composite electrolyte interposed between the positive electrode and the negative electrode.

Now, a composite electrolyte its preparation method, a secondary battery comprising the same, and the like according to specific embodiments of the present disclosure will be described.

The composite electrolyte according to one embodiment of the disclosure includes a liquid electrolyte; a crosslinked polymer of monomers having a curable functional group; and oxide-based solid electrolyte particles dispersed on the crosslinked polymer and having a particle size of more than 300 nm.

The composite electrolyte according to one embodiment includes a crosslinked polymer obtained by curing a monomer having a curable functional group (ethylenically unsaturated bond, etc.) by a method such as heat curing, and also includes a liquid electrolyte contained in such a crosslinked polymer, and oxide-based solid electrolyte particles dispersed on the crosslinked polymer and having a particle size of more than 300 nm, or 310 to 800 nm, or 350 to 600 nm.

As the composite electrolyte of one embodiment includes a liquid electrolyte, such as an electrolyte solution containing a non-aqueous organic solvent and a lithium salt, within the crosslinked structure of the crosslinked polymer, it can exhibit excellent mechanical properties even without the need for a separate separation membrane, which can minimize the occurrence of ignition or the like due to leakage of the liquid electrolyte or the like.

In addition, it has been found that the oxide-based solid electrolyte particles, particularly, the oxide-based solid electrolyte particles whose particle size and/or content range are optimized, are further included in the crosslinked polymer, thereby capable of exhibiting more improved ionic conductivity. This is predicted to be because the particle size and content of the oxide-based solid electrolyte particles are optimized so that these particles can be more uniformly dispersed in the crosslinked polymer and liquid electrolyte. As a result, the ionic conductivity due to the liquid electrolyte and the oxide-based solid electrolyte particles can be maximized, and the ionic conductivity of the composite electrolyte of one embodiment can be further improved.

On the other hand, the liquid electrolyte included in the crosslinked polymer may include a non-aqueous organic solvent and a lithium salt. Such a non-aqueous organic solvent maintains a liquid state within the crosslinked structure of the crosslinked polymer, or a portion thereof may be cured together with the crosslinked polymer, thereby further improving the mechanical properties of the composite electrolyte. Such a non-aqueous organic solvent can dissociate the lithium salt within the crosslinked polymer and act as an ion transport medium. Therefore, such a liquid electrolyte is included in the crosslinked polymer, so that the composite electrolyte can exhibit superior ionic conductivity compared to a polymer solid electrolyte in a solid state.

The type of non-aqueous organic solvent that can be used herein is not particularly limited, and any organic solvent previously known to be applicable to the electrolyte of a lithium ion battery and the like can be used. Examples of such an organic solvent include at least one selected from the group consisting of a carbonate-based solvent, an ether-based solvent, a nitrile-based solvent, a phosphate-based solvent, and a sulfone-based solvent.

More specifically, the carbonate-based solvent may include dimethyl carbonate, diethyl carbonate, dipropyl carbonate, ethylene carbonate, propylene carbonate, butylene carbonate, fluoroethylene carbonate, methyl propyl carbonate, ethyl methyl carbonate, ethyl propyl carbonate, methyl(2,2,2-trifluoroethyl)carbonate, or the like. The phosphate-based solvent may include trimethyl phosphate, triethyl phosphate, 2-(2,2,2-trifluoroethoxy)-1,3,2-dioxaphosphorane 2-oxide, or the like.

Moreover, as the ether-based solvent, dibutyl ether, tetraglyme, diglyme, dimethoxyethane, or a tetrahydrofuran derivative such as 2-methyltetrahydrofuran can be used, and as the nitrile-based solvent, succinonitrile, adiponitrile, sebaconitrile, acetonitrile, propionitrile, or the like can be used. Further, dimethyl sulfone, ethylmethyl sulfone, sulforane, or the like can be used as the sulfone-based solvent.

However, from the viewpoint of superior mechanical properties and safety of the composite electrolyte, as the organic solvent, it is preferable to use a carbonate-based solvent, sulfone-based solvent, phosphate-based solvent, or the like, which can be at least partially cured with the crosslinked polymer and exhibits flame retardancy. In addition, as the organic solvent, it is more preferable to use a solvent that exhibits low volatility under curing conditions for forming the crosslinked polymer, for example, under heat-curing conditions of 60 to 80°C.

On the other hand, the lithium salt that is dissolved or dispersed in the organic solvent may include any lithium salt previously known to be applicable to the electrolyte of a lithium secondary battery, for example, at least one selected from the group consisting of LiFSI(lithium bis(fluorosulfonyl)imide), LiTFSI(lithium bis(trifluoromethanesulfonyl)imide), LiCl, LiBr, Lil, LiClO₄, LiBF₄, LiPF₆, LiB₁₀Cl₁₀, LiCFsSOs, LiCF₃CO₂, LiC₄BO₈, LiAsF₆, LiSbF₆, LiAlCl₄, CH₃SO₃Li, CFsSOsLi, (C₂F₅SO₂)₂NLi, (CF₃SO₂)₃CLi, chloroborane lithium, lithium lower aliphatic carboxylate having 4 or less carbon atoms, lithium 4-phenyl borate and lithium imide.

Such a lithium salt may be included in the organic solvent of the liquid electrolyte at a concentration of 0.8 M to 4.0 M, or 1.0 M to 2.0 M, whereby the composite electrolyte of one embodiment can exhibit excellent thermal stability and ionic conductivity.

On the other hand, the composite electrolyte of one embodiment includes a crosslinked polymer that includes the liquid electrolyte and the oxide-based solid electrolyte particles described below in a crosslinked structure. Such a crosslinked polymer may be a crosslinked polymer obtained by heat-curing a polyfunctional monomer having a plurality of curable unsaturated bonds, such as a (meth)acrylate group, an alkoxylate group, a hydroxy group, a cyano group, or a carboxylic acid group.

Since the liquid electrolyte is included in the crosslinked structure of this crosslinked polymer, the composite electrolyte exhibits excellent mechanical properties even without a separate separation membrane, while the safety of lithium secondary batteries can be further improved by suppressing liquid leakage.

More specific examples of the curable monomer for forming the crosslinked polymer includeat least one selected from the group consisting of ethylene glycol diacrylate, triethylene glycol diacrylate, ethoxylate trimethylolpropane triacrylate, bisphenol A ethoxylate dimethacrylate, acrylic acid, carboxyethyl acrylate, methyl cyanoacrylate, ethyl cyanoacrylate, ethylcyano ethoxyacrylate, cyanoacrylic acid, hydroxyethyl methacrylate and hydroxypropyl acrylate. It goes without saying that the crosslinked polymer may be a homopolymer in which one selected from among these is cured or a copolymer in which two or more thereof are cured.

Such a crosslinked polymer may be contained in an amount of 3 to 20% by weight, or 5 to 15% by weight based on the total weight of the composite electrolyte. Therefore, the composite electrolyte of one embodiment can exhibit more excellent mechanical properties, so that liquid leakage, etc. can be more effectively suppressed, and also the liquid electrolyte and oxide-based solid electrolyte particles are uniformly included and dispersed on the crosslinked polymer, thus exhibiting further improved ionic conductivity.

On the other hand, the composite electrolyte of one embodiment has a particle size of more than 300 nm, or 310 to 800 nm, or 350 to 600 nm, so as to exhibit further improved ionic conductivity, and further includes oxide-based solid electrolyte particles dispersed on the crosslinked polymer.

In particular, as supported by Examples or the like below, it was confirmed that as the particle size range and/or content range of such oxide-based solid electrolyte particles are optimized, the composite electrolyte of one embodiment can exhibit improved ionic conductivity. On the other hand, it was confirmed that when the particle size range of the oxide-based solid electrolyte particles is reduced to 300 nm or less,the ionic conductivity of the composite electrolyte deteriorates. Moreover, even when the particle size range is excessively large, the oxide-based solid electrolyte particles may not be uniformly dispersed, which may deteriorate the properties of the composite electrolyte.

Such oxide-based solid electrolyte particles may include, for example, one or more lithium-containing oxide-based particles selected from the group consisting of LAGP (lithium aluminum germanium phosphate)-based compound, LLZO (lithium lanthanum zirconium oxide)-based compound, LATP (lithium aluminum titanium phosphate)-based compound, LLZTO (lithium lanthanum zirconium tantalum oxide)-based compound, LSTP (lithium silicon titanium phosphate)-based compound, and lithium oxide (e.g. Li₂O). Among these, the cation transport coefficient can be further improved by using the particles of the LATP (lithium aluminum titanium phosphate)-based compound, and the composite electrolyte of one embodiment can exhibit further improved ionic conductivity.

Further, the oxide-based solid electrolyte particles may be contained in an amount of 0.1 to 15 parts by weight, or 0.3 to 12 parts by weight, based on 100 parts by weight of the total of the above-mentioned liquid electrolyte and crosslinked polymer. It was confirmed that when the content of the oxide-based solid electrolyte particles is too small, the ionic conductivity of the composite electrolyte is insufficient, and even when the content thereof it too large, the ionic conductivity of the composite electrolyte rather decreases.

The composite electrolyte of the above-mentioned one embodiment can be prepared by a method comprising the steps of: forming, on a substrate, a composition comprising a liquid electrolyte, a monomer having a curable functional group, and oxide-based solid electrolyte particles having a particle size of more than 300 nm; and heat-curing the monomers of the composition at 60°C or more, or 60 to 80°C in the presence of an initiator.

According to this preparation method, the composite electrolyte of one embodiment exhibiting excellent mechanical properties and ionic conductivity can be prepared by a simple method of mixing each component of the composite electrolyte of an embodiment and heat-curing the monomer in the presence of a thermal initiator or the like. In addition, in this preparation method, as the composite electrolyte is prepared by heat-curing at a temperature of about 60 to 80°C, the phenomenon in which organic solvents and the like contained in the liquid electrolyte evaporate during the above preparation process can be reduced, and a composite electrolyte with better properties can be prepared.

On the other hand, according to an example of a method for preparing the composite electrolyte, the above-mentioned organic solvent and lithium salt are first mixed to form a liquid electrolyte, and a monomer having a curable functional group, oxide-based solid electrolyte particles having a particle size of more than 300 nm, a thermal initiator, and the like are added and mixed to this liquid electrolyte simultaneously or sequentially, and then such a composition is coated onto the substrate, heat-treated, and cured to prepare the above-mentioned composite electrolyte.

At this time, the curing process, etc. may be carried out on a separate porous separation membrane or a positive electrode or a negative electrode, or may be carried out on a separate substrate prepared in advance, for example, a resin substrate such as polyester such as PET. Depending on the type of each substrate on which this curing process is carried out, the composite electrolyte is prepared in a form of being coated on a separation membrane, overcoated and attached to each electrode, or prepared in the form of a free-standing film by itself, and can be applied as an electrolyte membrane for replacing the porous separation membrane of lithium secondary batteries.

Further, the composition can be coated onto the substrate according to a general liquid composition coating method, and the curing process may vary depending on the specific composition of the composition, but may be carried out, for example, by heat treatment for 1 to 24 hours, or 2 to 12 hours.

On the other hand, to properly heat-cure the above-mentioned monomer, a thermal initiator previously known to be usable for curing or crosslinking polymerization of polyfunctional monomers having a (meth)acrylate group, an alkoxylate group, a hydroxy group, a cyano group, a carboxylic acid group or the like can be used as the initiator. Specific examples of such initiators include peroxide initiators such as benzoyl peroxide, acetyl peroxide, dilauryl peroxide, di-tert-butyl peroxide, t-butyl peroxy-2-ethyl-hexanoate, cumyl hydroperoxide, or hydrogen peroxide; or 2,2'-azobis(2-cyanobutane), 2,2'-azobis(methylbutyronitrile), 2,2'-azobis(isobutyronitrile)(AIBN), 2,2'-azobisdimethyl-valeronitrile(AMVN), or the like, and two or more types selected from among these may be used together, or various other thermal initiators may be used.

Meanwhile, according to another embodiment of the disclosure, there is provided a lithium secondary battery comprising the above-mentioned composite electrolyte. Such lithium secondary batteries include, for example, a positive electrode containing a positive electrode active material; a negative electrode containing a negative electrode active material; and the composite electrolyte of one embodiment interposed between the positive electrode and the negative electrode.

According to more specific examples, the composite electrolyte is included in the form of an overcoating membrane coated and attached onto the positive electrode or negative electrode (e.g., see Battery Example 2 below), or alternatively, it is prepared in the form of a free-standing film, and is not attached onto the positive electrode or the negative electrode, however, may be included in the form of an electrolyte membrane separably interposed between the positive electrode and the negative electrode (e.g., see Battery Example 1 below). In addition, such an electrolyte membrane may be included alone, however, may further include a porous separation membrane interposed between the positive electrode and the negative electrode together with the electrolyte membrane in order to provide additional mechanical properties and insulation properties of the lithium secondary battery. The electrolyte membrane may be laminated on such a porous separation membrane.

On the other hand, in the lithium secondary battery of the other embodiment, the positive electrode active material is not particularly limited as long as it is a material capable of reversibly intercalating and de-intercalating lithium ions, and examples thereof may include a lithium metal composite oxide containing one or more metal elements selected from the group consisting of Co, Mn, Ni, W, Cu, Fe, V, Cr, Ti, Zr, Zn, Al, In, Ta, Y, La, Sr, Ga, Sc, Gd, Sm, Ca, Ce, Nb, Mg and Mo.

More specifically, as the positive electrode active material, a compound represented by any of the following formulas can be used. LiₐA_{1-b}R_{b}D₂(wherein, 0.90 ≤ a ≤ 1.8 and 0 ≤ b ≤ 0.5); LiₐE_{1-b}R_{b}O_{2-c}D_{c}(wherein, 0.90 ≤ a ≤ 1.8, 0 ≤ b ≤ 0.5, and 0 ≤ c ≤ 0.05); LiE_{2-b}R_{b}O_{4-c}D_{c}(wherein, 0 ≤ b ≤ 0.5, 0 ≤ c ≤ 0.05); LiₐNi_{1-b-c}Co_{b}R_{c}D_{α}(wherein, 0.90 ≤ a ≤ 1.8, 0 ≤ b ≤ 0.5, 0 ≤ c ≤ 0.05 and 0 < α ≤ 2); LiₐNi_{1-b-c}Co_{b}R_{c}O_{2-α}Z_{α}(wherein, 0.90 ≤ a ≤ 1.8, 0 ≤ b ≤ 0.5, 0 ≤ c ≤ 0.05 and 0 < α < 2); LiₐNi_{1-b-c}Co_{b}R_{c}O_{2-α}Z₂(wherein, 0.90 ≤ a ≤ 1.8, 0 ≤ b ≤ 0.5, 0 ≤ c ≤ 0.05 and 0 < α < 2); LiₐNi_{1-b-c}Mn_{b}R_{c}D_{α}(wherein, 0.90 ≤ a ≤ 1.8, 0 ≤ b ≤ 0.5, 0 ≤ c ≤ 0.05 and 0 < α ≤ 2); LiₐNi_{1-b-c}Mn_{b}R_{c}O_{2-α}Z_{α}(wherein, 0.90 ≤ a ≤ 1.8, 0 ≤ b ≤ 0.5, 0 ≤ c ≤ 0.05 and 0 < α < 2); LiₐNi_{1-b-c}Mn_{b}R_{c}O_{2-α}Z₂(wherein, 0.90 ≤ a ≤ 1.8, 0 ≤ b ≤ 0.5, 0 ≤ c ≤ 0.05 and 0 < α < 2); LiₐNi_{b}E_{c}G_{d}O₂(wherein, 0.90 ≤ a ≤ 1.8, 0 ≤ b ≤ 0.9, 0 ≤ c ≤ 0.5 and 0.001 ≤ d ≤ 0.1); LiₐNi_{b}Co_{c}Mn_{d}GₑO₂(wherein, 0.90 ≤ a ≤ 1.8, 0 ≤ b ≤ 0.9, 0 ≤ c ≤ 0.5, 0 ≤ d ≤0.5 and 0.001 ≤ e ≤ 0.1); LiₐNiG_{b}O₂(wherein, 0.90 ≤ a ≤ 1.8 and 0.001 ≤ b ≤ 0.1); LiₐCoG_{b}O₂(wherein, 0.90 ≤ a ≤ 1.8 and 0.001 ≤ b ≤ 0.1); LiₐMnG_{b}O₂(wherein, 0.90 ≤ a ≤ 1.8 and 0.001 ≤ b ≤ 0.1); LiₐMn₂G_{b}O₄(wherein, 0.90 ≤ a ≤ 1.8 and 0.001 ≤ b ≤ 0.1); QO₂; QS₂; LiQS₂; V₂O₅; LiV₂O₅; LiTO₂; LiNiVO₄; and Li_{(3-f)}J₂(PO₄)₃(0 ≤ f ≤ 2).

In the above formula, A is Ni, Co, Mn, or a combination thereof; R is Al, Ni, Co, Mn, Cr, Fe, Mg, V or a combination thereof; D is O, F, S, P or a combination thereof; E is Co, Mn, or a combination thereof; Z is F, S, P or a combination thereof; G is Al, Cr, Mn, Fe, Mg, La, Ce, V or a combination thereof; Q is Ti, Mo, Mn, or a combination thereof; T is Cr, V, Fe, Sc, Y or a combination thereof; and J is V, Cr, Mn, Co, Ni, Cu, or a combination thereof.

In addition, the positive electrode may further include a binder and an electrically conductive material in addition to the above-mentioned positive electrode active material. The binder is a component that assists in the bonding between a positive electrode active material and an electrically conductive material and the bonding to a current collector, and for example, may be at least one selected from the group consisting of polyvinylidene fluoride(PVdF), polyvinylidene fluoride-hexafluoropropylene copolymer(PVdF/HFP), polyvinyl acetate, polyvinyl alcohol, polyvinyl ether, polyethylene, polyethylene oxide, alkylated polyethylene oxide, polypropylene, polymethyl (meth)acrylate, polyethyl (meth)acrylate, polytetrafluoroethylene(PTFE), polyvinyl chloride, polyacrylonitrile, polyvinylpyridine, polyvinylpyrrolidone, styrene-butadiene rubber, acrylonitrile-butadiene rubber, ethylene-propylene-diene monomer (EPDM) rubber, sulfonated EPDM rubber, styrene-butylene rubber, fluororubber, carboxymethylcellulose(CMC), starch, hydroxypropylcellulose, regenerated cellulose, and a mixture thereof, but are not necessarily limited thereto.

The binder may be added in an amount of 1 to 50 parts by weight, or 3 to 15 parts by weight, based on 100 parts by weight of total weight of the positive electrode. As a result, excellent adhesion between the positive electrode active material and the current collector and capacity characteristics of the secondary battery can be maintained.

Further, the electrically conductive material comprised in the positive electrode is not particularly limited as long as it does not cause side reactions in the internal environment of the battery and has excellent electrical conductivity while not causing chemical changes in the battery. The electrically conductive material may typically be graphite or electrically conductive carbon, and may be, for example, one selected from the group consisting of graphite such as natural graphite or artificial graphite; carbon black such as carbon black, acetylene black, Ketjen black, Denka black, thermal black, channel black, furnace black, and lamp black; carbon-based materials whose crystal structure is graphene or graphite; electrically conductive fibers such as carbon fibers and metal fibers; carbon fluoride; metal powders such as aluminum powder and nickel powder; electrically conductive whiskers such as zinc oxide and potassium titanate; electrically conductive oxides such as titanium oxide; electrically conductive polymers such as polyphenylene derivatives; or a mixture of two or more thereof, but are not necessarily limited thereto.

The electrically conductive material may be typically added in an amount of 0.5 to 50 parts by weight, or 1 to 30 parts by weight based on 100 parts by weight of total weight of the positive electrode. Thereby, excellent electrochemical properties such as conductivity and capacity of the positive electrode and lithium secondary battery can be maintained.

In addition, a filler may be optionally added to the positive electrode as a component for inhibiting the expansion of the positive electrode. Such a filler is not particularly limited as long as it can inhibit the expansion of the electrode without causing chemical changes in the battery, and examples thereof may comprise olefinic polymers such as polyethylene and polypropylene; fibrous materials such as glass fibers and carbon fibers.

The above-mentioned positive electrode can be prepared, for example, by dispersing and mixing the positive electrode active material, the binder, the electrically conductive material and the like in a dispersion medium (solvent) to form a slurry, and applying the slurry onto the positive electrode current collector, followed by drying and rolling it. At this time, the dispersion medium may be N-methyl-2-pyrrolidone (NMP), dimethyl formamide (DMF), dimethyl sulfoxide (DMSO), ethanol, isopropanol, water, or a mixture thereof, but are not necessarily limited thereto.

Further, the positive electrode current collector may be platinum (Pt), gold (Au), palladium (Pd), iridium (Ir), silver (Ag), ruthenium (Ru), nickel (Ni), stainless steel (STS), aluminum (Al), molybdenum (Mo), chromium (Cr), carbon (C), titanium (Ti), tungsten (W), ITO (In doped SnO₂), FTO (F doped SnO₂), or an alloy thereof, or aluminum (Al) or stainless steel whose surface is treated with carbon (C), nickel (Ni), titanium (Ti) or silver (Ag), or the like. The shape of the positive electrode current collector may be in the form of a foil, film, sheet, punched form, porous body, foam or the like.

Additionally, in the lithium secondary battery of another embodiment described above, the negative electrode may be prepared according to a conventional method known in the art. For example, the negative electrode active material, the electrically conductive material, the binder, and if necessary, the filler and the like are dispersed and mixed in a dispersion medium (solvent) to form a slurry, and the slurry can be applied onto the negative electrode current collector, followed by drying and rolling it to prepare a negative electrode.

At this time, as the negative electrode active material, a compound enabling the reversible intercalation and deintercalation of lithium may be used. A specific example of the negative electrode active material may be a carbonaceous material such as artificial graphite, natural graphite, graphitized carbon fiber or amorphous carbon; a metallic material capable of alloying with lithium, such as Si, Al, Sn, Pb, Sb, Zn, Bi, In, Mg, Ga, Cd, a Si alloy, a Sn alloy or an Al alloy; a metal oxide capable of doping and dedoping lithium such as SiOβ(0 < β < 2), SnO₂, vanadium oxide, or lithium vanadium oxide; or a composite including the metallic material and the carbonaceous material such as a Si-C composite or a Sn-C composite, and any one or a mixture of two or more thereof may be used. Further, as the negative electrode active material, a metal lithium thin film may be used. In addition, as a carbonaceous material, both low-crystalline carbon and high-crystalline carbon may be used. Representative examples of the low-crystalline carbon include soft carbon and hard carbon, and representative examples of the high-crystalline carbon include amorphous, sheet-type, flake-type, spherical or fiber-type natural or artificial graphite, Kish graphite, pyrolytic carbon, mesophase pitch-based carbon fiber, meso-carbon microbeads, mesophase pitches, and high-temperature calcined carbon such as petroleum or coal tar pitch derived cokes.

In addition, since the binder and the electrically conductive material is the same as described above in the positive electrode, further description therefor will be omitted.

The negative electrode current collector may be platinum (Pt), gold (Au), palladium (Pd), iridium (Ir), silver (Ag), ruthenium (Ru), nickel (Ni), stainless steel (STS), copper (Cu), molybdenum (Mo), chromium (Cr), carbon (C), titanium (Ti), tungsten (W), ITO (In doped SnO₂), FTO (F doped SnO₂), or an alloy thereof, or copper (Cu) or stainless steel whose surface was treated with carbon (C), nickel (Ni), titanium (Ti), silver (Ag), or the like, but are not necessarily limited thereto. The shape of the negative electrode current collector may be in the form of a foil, film, sheet, punched form, porous body, foam or the like.

On the other hand, in the lithium secondary battery of the other embodiment, the composite electrolyte of one embodiment may be interposed between the positive electrode and the negative electrode in the form of, for example, a membrane or film having a layered structure as already described above. In this case, the composite electrolyte membrane can also serve as a separation membrane (that is, electrically insulating between the positive electrode and the negative electrode and also allowing lithium ions to pass through).At this time, the composite electrolyte membrane may be coated and attached to one surface of the positive electrode or the negative electrode in the form of a thin film and included in the secondary battery. Further, the composite electrolyte membrane may be independently interposed between the positive electrode and the negative electrode. Further, the lithium secondary battery of the other embodiment may be a semi-solid battery that is used in combination with a liquid electrolyte and a solid electrolyte.

In addition, when a porous separation membrane is added to the lithium secondary battery, such a separation membrane can be made of olefinic polymers such as polyethylene and polypropylene, glass fiber, etc. in the form of a sheet, a multilayer membrane, a microporous membrane, a woven fabric, and a nonwoven fabric, or the like, but is not necessarily limited thereto. However, it may be preferable to apply porous polyethylene or porous glass fiber non-woven fabric (glass filter) as a separation membrane, and it may be more preferable to apply a porous glass filter (glass fiber non-woven fabric) as a separation membrane. The separation membrane may be an insulating thin film with high ion permeability and mechanical strength, and the pore diameter of the separation membrane may generally range from 0.01 to 10 *µ*m, and the thickness may generally range from 5 to 300 *µ*m, but are not limited thereto.

Meanwhile, the lithium secondary battery of the other embodiments may be prepared according to a conventional method in the art. For example, it can be prepared by forming a composite electrolyte membrane between the positive electrode and the negative electrode, and optionally adding a porous separation membrane.

Such a lithium secondary battery can be used not only as a battery cell used as a power source for small-sized devices, but also as a unit battery of a battery module that is a power source for medium- and large-sized devices.

### [Advantageous Effects]

According to the present disclosure, as the liquid electrolyte is included in the crosslinked structure of the crosslinked polymer, it can exhibit excellent mechanical properties even without a separate separation membrane, which provides a composite electrolyte that can minimize the occurrence of ignition due to leakage of liquid electrolyte, etc.

In addition, such a composite electrolyte can exhibit improved ionic conductivity, and can greatly contribute to improving the safety and electrical characteristics of a lithium secondary battery.

### [BRIEF DESCRIPTION OF THE DRAWINGS]

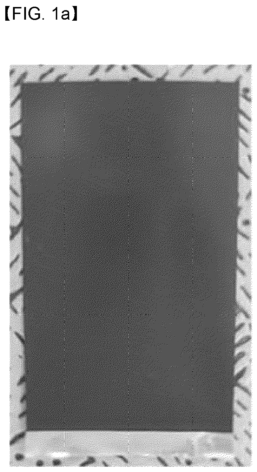

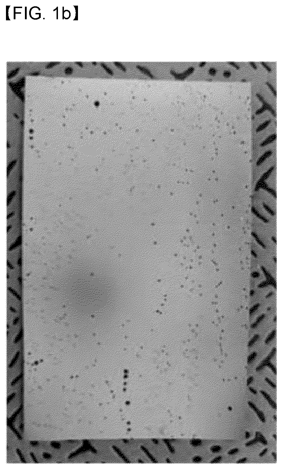

FIGS. 1a and 1b are photographs showing a comparison between the surface state of the positive electrode before overcoating the composite electrolyte of Example 2 on the positive electrode (FIG. 1a) and the surface state after overcoating (FIG. 1b), during the preparation process of Battery Example 2.

### [DETAILED DESCRIPTION OF THE EMBODIMENTS]

The following examples will be described more fully hereinafter so that the present disclosure can be understood with ease, but these examples are for illustrative purposes only. It would be obvious to those skilled in the art that various changes and modifications can be made within the scope and technical spirit of the invention, and it goes without saying that such changes and modifications fall within the scope of the appended claims.

### Comparative Example 1: Preparation of composite electrolyte

First, a mixed solvent in which ethylene carbonate and propylene carbonate were mixed at a volume ratio of 1:1 was used as a non-aqueous organic solvent, and lithium salt LiPF₆ was dissolved therein at a concentration of 1M to form a liquid electrolyte. Such a liquid electrolyte and ethoxylate trimethylolpropane triacrylate (ETPTA), which is a monomer having a curable functional group, were mixed at a weight ratio of 90:10, and further, 0.1 part by weight of AIBN, which is a thermal initiator, was mixed based on 100 parts by weight of the mixture to prepare a composition for forming a composite electrolyte.

This composition was coated onto a PET substrate with a bar coater, and heat-treated at a temperature of 60°C for 360 minutes to proceed with heat curing. Thereby, the composite electrolyte of Comparative Example 1 formed on the substrate was prepared.

### Example 1: Preparation of composite electrolyte

In the preparation method of Comparative Example 1, the procedure of mixing the liquid electrolyte and the monomer having a curable functional group was performed in the same manner. Additionally, based on 100 parts by weight of the mixture, 0.1 parts by weight of AIBN as a thermal initiator, and 4 parts by weight of oxide-based solid electrolyte particles of LiAl_{0.3}Ti_{1.7}(PO₄)₃ (LATP type) having a particle size of 400 nm (weight ratio of liquid electrolyte + monomer: oxide-based particles = 25: 1) were mixed to prepare a composition for forming a composite electrolyte.

The subsequent heat curing process was carried out in the same manner as in Comparative Example 1 to prepare the composite electrolyte of Example 1.

### Example 2: Preparation of composite electrolyte

In the preparation method of Comparative Example 1, the procedure of mixing the liquid electrolyte and the monomer having a curable functional group was performed in the same manner. Additionally, based on 100 parts by weight of the mixture, 0.1 parts by weight of AIBN as a thermal initiator, and 11.1 parts by weight of oxide-based solid electrolyte particles of LiAl_{0.3}Ti_{1.7}(PO₄)₃ (LATP type) having a particle size of 400 nm (weight ratio of liquid electrolyte + monomer: oxide-based particles = 9: 1) were mixed to prepare a composition for forming a composite electrolyte.

The subsequent heat curing process was carried out in the same manner as in Comparative Example 1 to prepare the composite electrolyte of Example 2.

### Example 3: Preparation of composite electrolyte

In the preparation method of Comparative Example 1, the procedure of mixing the liquid electrolyte and the monomer having a curable functional group was performed in the same manner. Additionally, based on 100 parts by weight of the mixture, 0.1 parts by weight of AIBN as a thermal initiator, and 4 parts by weight of oxide-based solid electrolyte particles of lithium oxide (Li₂O) having a particle size of 310 nm (weight ratio of liquid electrolyte + monomer: oxide-based particles = 25: 1) were mixed to prepare a composition for forming a composite electrolyte.

The subsequent heat curing process was carried out in the same manner as in Comparative Example 1 to prepare the composite electrolyte of Example 3.

### Example 4: Preparation of composite electrolyte

In the preparation method of Comparative Example 1, the procedure of mixing the liquid electrolyte and the monomer having a curable functional group was performed in the same manner. Additionally, based on 100 parts by weight of the mixture, 0.1 parts by weight of AIBN as a thermal initiator, and 11.1 parts by weight of oxide-based solid electrolyte particles of lithium oxide (Li₂O) having a particle size of 310 nm (weight ratio of liquid electrolyte + monomer: oxide-based particles = 9: 1) were mixed to prepare a composition for forming a composite electrolyte.

The subsequent heat curing process was carried out in the same manner as in Comparative Example 1 to prepare the composite electrolyte of Example 4.

### Comparative Example 2: Preparation of composite electrolyte

The composite electrolyte of Comparative Example 2 was prepared in the same manner as in Example 2, except that instead of oxide-based solid electrolyte particles of LiAl_{0.3}Ti_{1.7}(PO₄)₃ (LATP type) having a particle size of 400 nm, oxide-based solid electrolyte particles having the same formula having a particle size of 200 nm was used in the preparation method of Example 2.

### Comparative Example 3: Preparation of composite electrolyte

In the preparation method of Comparative Example 1, the procedure of mixing the liquid electrolyte and the monomer having a curable functional group was performed in the same manner. Additionally, based on 100 parts by weight of the mixture, 0.1 parts by weight of AIBN as a thermal initiator, and 25 parts by weight of oxide-based solid electrolyte particles of LiAl_{0.3}Ti_{1.7}(PO₄)₃ (LATP type) having a particle size of 200 nm (weight ratio of liquid electrolyte + monomer: oxide-based particles = 8: 2) were mixed to prepare a composition for forming a composite electrolyte.

The subsequent heat curing process was carried out in the same manner as in Comparative Example 1 to prepare the composite electrolyte of Comparative Example 3.

### Comparative Example 4: Preparation of composite electrolyte

In the preparation method of Comparative Example 1, the procedure of mixing the liquid electrolyte and the monomer having a curable functional group was performed in the same manner. Additionally, based on 100 parts by weight of the mixture, 0.1 parts by weight of AIBN as a thermal initiator, and 42.86 parts by weight of oxide-based solid electrolyte particles of LiAl_{0.3}Ti_{1.7}(PO₄)₃ (LATP type) having a particle size of 200 nm (weight ratio of liquid electrolyte + monomer: oxide-based particles = 7: 3) were mixed to prepare a composition for forming a composite electrolyte.

The subsequent heat curing process was carried out in the same manner as in Comparative Example 1 to prepare the composite electrolyte of Comparative Example 4.

### Battery Example 1: Production of lithium secondary battery

First, lithium nickel cobalt manganese composite oxide (NCM 811) containing 80 mol% of nickel among all transition metals was used as the positive electrode active material. Such a positive electrode active material, carbon black as a conductive material, and polyvinylidene fluoride (PVdF) as a binder were mixed at a weight ratio of 96.5:1.5:2, and the mixture was dispersed in a NMP solvent to prepare a slurry, which was then coated to a uniform thickness on 25 *µ*m thick aluminum foil (Al foil) using a Matis coater (Labdryer/coater type LTE, Werner Mathis AG), which is a blade type coating machine, and dried in a vacuum oven at 120°C for 13 hours to manufacture a positive electrode for a lithium secondary battery.

A negative electrode for a lithium secondary battery was manufactured in the same manner as in the above positive electrode by using graphite as the negative electrode active material.

The positive electrode and the negative electrode were positioned to face each other, and the composite electrolyte membranes manufactured in Examples or Comparative Examples were interposed between these electrodes to prepare an electrode assembly. The electrode assembly was positioned inside a case to produce a lithium secondary battery.

### Battery Example 2: Production of lithium secondary battery

First, lithium nickel cobalt manganese composite oxide (NCM 811) containing 80 mol% of nickel among all transition metals was used as the positive electrode active material. Such a positive electrode active material, carbon black as a conductive material, and polyvinylidene fluoride (PVdF) as a binder were mixed at a weight ratio of 96.5:1.5:2, and the mixture was dispersed in a NMP solvent to prepare a slurry, which was then coated to a uniform thickness on 25 *µ*m thick aluminum foil (Al foil) using a Matis coater (Labdryer/coater type LTE, Werner Mathis AG), which is a blade type coating machine, and dried in a vacuum oven at 120°C for 13 hours to manufacture a positive electrode for a lithium secondary battery.

A negative electrode for a lithium secondary battery was manufactured in the same manner as in the above positive electrode by using graphite as the negative electrode active material.

The composition for forming a composite electrolyte of Example 2 was coated on the positive electrode, and then a heat curing process was carried out on the positive electrode under the same conditions as Comparative Example 1. As a result, the composite electrolyte of Example 2 was prepared in a state where the composite electrolyte was overcoated on the positive electrode. For reference, photographs of the surface state of the positive electrode before coating the composition for forming the composite electrolyte and the surface state of the positive electrode overcoated with the composite electrolyte of Example 2 were shown in FIGS. 1a and 1b, respectively.

Then, the positive electrode and the negative electrode were positioned to face each other, and the composite electrolyte membranes or porous polyethylene-based separation membranes manufactured in Examples or Comparative Examples were interposed between these electrodes to prepare an electrode assembly. The electrode assembly was positioned inside a case to produce a lithium secondary battery.

### Experimental Example: Measurement of ionic conductivity

The ion conductivity of the composite electrolyte for lithium secondary battery prepared in Examples 1 to 4 and Comparative Examples 1 to 4 was measured, and the results are shown in Table 1 below. To measure the ionic conductivity, SP-300 otentiostat/Galvanostat (Bio-Logic SAS, France), which is an AC impedance measuring instrument, was used.

**[Table 1]**

| | Compara tive Example 1 | Exam ple 1 | Exam ple 2 | Exam ple 3 | Exam ple 4 | Compara tive Example 2 | Compara tive Example 3 | Compara tive Example 4 |
|---|---|---|---|---|---|---|---|---|
| Ionic conducti vity (mS/cm) | 4.87 | 6.28 | 5.08 | 6.26 | 5.25 | 4.00 | 3.70 | 3.21 |

Referring to Table 1, it was confirmed that the composite electrolytes of Examples 1 to 4 exhibit excellent electrical conductivity as compared to Comparative Example 1, which does not contain oxide-based solid electrolyte particles, as well as to Comparative Examples 2 to 4, in which the particle size, etc. of the oxide-based solid electrolyte particles deviate from a certain level.

## Claims

1. A composite electrolyte comprising:
a liquid electrolyte;
a crosslinked polymer of monomers having a curable functional group; and
oxide-based solid electrolyte particles dispersed on the crosslinked polymer and having a particle size of more than 300 nm.

2. The composite electrolyte according to claim 1, wherein the liquid electrolyte includes an organic solvent and a lithium salt.

3. The composite electrolyte according to claim 2, wherein the organic solvent includes at least one selected from the group consisting of a carbonate-based solvent, an ether-based solvent, a nitrile-based solvent, a sulfone-based solvent, and a phosphate-based solvent.

4. The composite electrolyte according to claim 1, wherein the monomer having a curable functional group includes at least one selected from the group consisting of ethylene glycol diacrylate, triethylene glycol diacrylate, ethoxylate trimethylolpropane triacrylate, bisphenol A ethoxylate dimethacrylate, acrylic acid, carboxyethyl acrylate, methyl cyanoacrylate, ethyl cyanoacrylate, ethylcyano ethoxyacrylate, cyanoacrylic acid, hydroxyethyl methacrylate and hydroxypropyl acrylate.

5. The composite electrolyte according to claim 1, wherein the crosslinked polymer is contained in an amount of 3 to 20% by weight based on the total weight of the composite electrolyte.

6. The composite electrolyte according to claim 1, wherein the oxide-based solid electrolyte particles have a particle size of 310 to 800 nm.

7. The composite electrolyte according to claim 1, wherein the oxide-based solid electrolyte particles include one or more particles selected from the group consisting of LAGP (lithium aluminum germanium phosphate)-based compound, LLZO (lithium lanthanum zirconium oxide)-based compound, LATP (lithium aluminum titanium phosphate)-based compound, LLZTO (lithium lanthanum zirconium tantalum oxide)-based compound, LSTP (lithium silicon titanium phosphate)-based compound, and lithium oxide.

8. The composite electrolyte according to claim 1, wherein the oxide-based solid electrolyte particles are contained in an amount of 0.1 to 15 parts by weight based on 100 parts by weight of the total of the liquid electrolyte and the crosslinked polymer.

9. A method for preparing the composite electrolyte of claim 1, the method comprising the steps of:
forming, on a substrate, a composition comprising a liquid electrolyte, a monomer having a curable functional group, and oxide-based solid electrolyte particles having a particle size of more than 300 nm; and
heat-curing the monomers of the composition at 60°C or more in the presence of an initiator.

10. The method for preparing the composite electrolyte according to claim 9, wherein the initiator is selected from the group consisting of benzoyl peroxide, acetyl peroxide, dilauryl peroxide, di-tert-butyl peroxide, t-butyl peroxy-2-ethylhexanoate, cumyl hydroperoxide, hydrogen peroxide, 2,2'-azobis (2-cyanobutane), 2,2'-azobis(methylbutyronitrile), 2,2'-azobis(isobutyronitrile) (AIBN) and 2,2'-azobisdimethyl-valeronitrile (AMVN).

11. A lithium secondary battery comprising a positive electrode containing a positive electrode active material; a negative electrode containing a negative electrode active material; and the composite electrolyte of claim 1 interposed between the positive electrode and the negative electrode.

12. The lithium secondary battery according to claim 11, wherein the composite electrolyte is coated onto the positive electrode or the negative electrode.

13. The lithium secondary battery according to claim 11, wherein an electrolyte layer containing the composite electrolyte is separably interposed between the positive electrode and the negative electrode.

14. The lithium secondary battery according to claim 11, further comprising a porous separation membrane interposed between the positive electrode and the negative electrode.
